# EUROPEAN PATENT SPECIFICATION

(11) **EP 4 560 814 B1**
(45) Date of publication and mention of the grant of the patent: **07.10.2026**
(21) Application number: 23898400.9
(22) Date of filing: 01.12.2023
(51) Int. Cl.: H01M 50/383, H01M 50/367, H01M 10/658, H01M 50/211, H01M 50/358

(54) **BATTERY PACK**
BATTERIEPACK
BLOC-BATTERIE

(30) Priority: 02.12.2022 KR 20220167129; 17.03.2023 KR 20230035444
(43) Date of publication of application: 28.05.2025
(73) Proprietor: LG Energy Solution, Ltd., Seoul 07335 (KR)
(72) Inventor: KIM, Min Bum, Daejeon 34122 (KR); JEON, Jong Pil, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/019734
(87) International publication number: WO 2024/117877

(56) References cited:
- WO-A1-2022/152550
- CN-A- 112 531 246
- CN-B- 112 531 246
- KR-A- 20190 036 260
- KR-A- 20220 091 852
- KR-A- 20220 091 958
- KR-A- 20220 155 879
- US-A1- 2021 288 366
- US-A1- 2022 059 902
- US-A1- 2022 158 146

## Description

### [Technical Field]

The present invention relates to a battery pack. More specifically, the battery pack of the present invention is characterized in that the passages through which the gas flows are provided with an insulating material or flame retardant to prevent the internal structure from collapsing due to high-temperature gases.

This application claims the benefit of priority from Korean Patent Application No. 10-2022-0167129, filed on December 2, 2022, Korean Patent Application No. 10-2023-0035444, filed on March 17, 2023, and Korean Patent Application No. 10-2023-0172120, filed on December 1, 2023

### [Background Technology of the Invention]

The types of secondary batteries include lithium-ion batteries, lithium polymer batteries, nickel-cadmium batteries, nickel-hydrogen batteries, and nickel-zinc batteries. The operating voltage of these unit secondary batteries, i.e., the unit battery cell, is about 2.5 V to 4.5 V. Therefore, if a higher output voltage is required, a plurality of battery cells may be connected in series to form a battery pack. Also, depending on the charge/discharge capacity required for the battery pack, a plurality of battery cells may be connected in parallel to form a battery pack. Accordingly, the number of battery cells included in the battery pack may be varied depending on the required output voltage or charge/discharge capacity.

For example, when configuring a battery pack by connecting a plurality of battery cells in series/parallel, a cell assembly consisting of a plurality of battery cells is configured first.

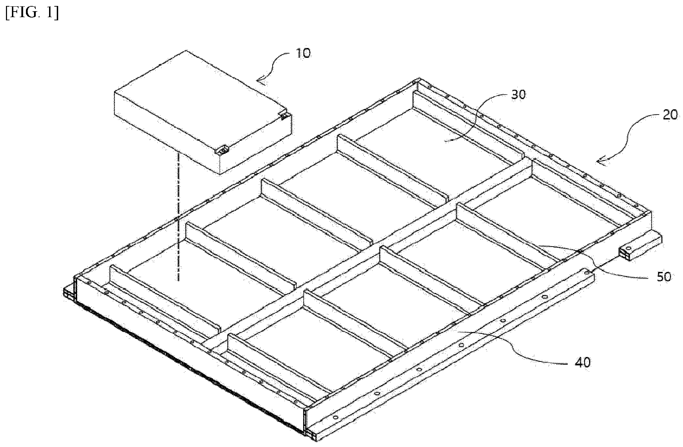

FIG. 1 illustrates a pack case 20 of a conventional battery pack in which a pouch-type cell assembly 10 is housed. The pack case 20 may provide a space in which the pouch-type cell assemblies 10 may each be separately housed, as shown in FIG. 1. The lower part of each of the pouch-type cell assemblies 10 may be supported by a base plate 30 corresponding to the bottom of the pack case 20, supported at the sides by a side wall 40 coupled along the border of the base plate 30, and supported at the sides by a separation wall 50, while simultaneously being separated.

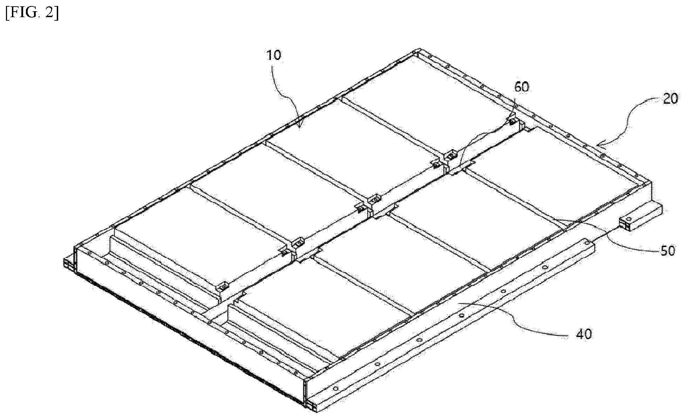

FIG. 2 illustrates a pack case 20 in which a plurality of pouch-type cell assemblies 10 are housed, each of the pouch-type cell assemblies 10 being separated by a separation wall 50. The pack case 20 may further include a main wall 60 crossing the center part as shown in FIG. 2, wherein each pouch-type cell assembly 10 is seated in a space separated by the main wall 60 and the separation wall 50.

Meanwhile, it is important for a battery pack with such a multi-battery module structure to facilitate the release of high-temperature gases generated by each battery module. If the high-temperature gases generated during the charging and discharging process are not effectively removed, heat accumulation will occur and consequently accelerate the deterioration of the battery modules, and in some cases, ignition or explosion may occur. Furthermore, the heat of the gases may be transferred to other normally functioning battery modules, causing the entire battery module housed within the battery pack to deteriorate or explode.

In the conventional art, battery packs and the like have been developed in which a gas flow path is provided to discharge high-temperature gas generated inside the battery pack to the outside. However, even if a gas flow path is provided as described above, the gas flow path often melts or collapses due to the high temperature of the gas, so a solution is required.

### [Prior art reference]

Korean Public Patent No. 10-2172517; WO 2022/152550 relates to a battery and a vehicle having such a battery.

### [Description of the Invention]

### [Technical Problem]

Accordingly, the present invention is designed to solve the above problems, and aims to provide a battery pack having a structure that can quickly discharge high-temperature gases generated internally to the outside.

Furthermore, the objective is to provide a battery pack whose internal structure does not easily collapse in the presence of high-temperature gases.

Other objects and advantages of the present invention will be understood from the following description, and will become more apparent from the embodiments of the present disclosure.

It will also be readily apparent that the objects and advantages of the present invention may be implemented by the means and combinations thereof disclosed in the patent claims.

### [Technical Solution]

The invention is defined by the appended independent claim 1. Additional embodiments are defined in the dependent claims. The present disclosure provides a battery pack including: a pack case providing a space for a cell assembly to be seated, wherein the pack case includes: a base plate supporting the lower part of a cell assembly; and a hollow-structured side wall coupled along a border of the base plate to support a side part of the cell assembly, wherein the side wall includes: a gas flow path through which gas can move therein; and a through-hole formed on the gas flow path such that the gas flow path communicates with a space in the pack case, the side wall is coated with a protective layer including at least one among an insulating material and a flame retardant on the inside. The protective layer may be formed on a gas flow path adjacent to the through-hole.

The protective layer may be formed throughout the gas flow path.

The gas flow path may be formed extending along the side wall.

The side wall may further include a discharge hole formed through an outer surface to allow the gas flow path to communicate with the outside.

The side wall further includes: an auxiliary flow path formed by being spaced apart at a predetermined distance from the top part of the gas flow path; and an auxiliary hole formed at a top part of the through-hole so that a space in the pack case communicates with the auxiliary flow path, wherein the protective layer may be formed on an auxiliary flow path adjacent to the auxiliary hole.

The protective layer may be formed throughout the auxiliary flow path.

The side wall may further include an auxiliary discharge hole formed through an outer surface to allow the auxiliary flow path to communicate with the outside.

The pack case further includes a top cover coupled to the side wall to cover a top part of the cell assembly, wherein the top cover includes: a top flow path for gas to move therein; and a top hole formed on the top flow path such that the top flow path communicates with a space in the pack case, wherein the top cover may be coated with a protective layer including at least one among an insulating material and a flame retardant on the inside.

The protective layer may be formed on a top flow path adjacent to the top hole.

The protective layer may be formed throughout the top flow path.

The side wall further includes an upwardly open flow path groove at the top end, wherein the flow path groove may be formed extending along a gas flow path of the side wall.

The top cover is coupled to the side wall such that a border part covers a top part of a flow path groove formed in a top end of the side wall, wherein the border part may include a communication hole opened to allow the flow path groove to communicate with the top flow path.

The protective layer may be formed on the flow path groove.

The side wall may further include a discharge hole formed through an outer surface to communicate with the gas flow path and the auxiliary groove.

The pack case further includes a hollow main wall crossing the center part and coupled to the base plate, wherein the main wall includes: a main flow path through which gas can move therein; and a main hole formed on the main flow path such that the main flow path communicates with a space in the pack case, wherein the protective layer may be formed on a main flow path adjacent to the main hole.

At least one among the front and rear ends of the main wall may be open to allow the main flow path to communicate with the outside.

### [Advantageous Effects]

According to the present invention, in a battery pack housing a plurality of cell assemblies, stability can be improved by preventing collapse of the internal structure caused by high-temperature gases.

### [Brief Description of the Drawings]

FIG. 1 illustrates a pack case included in a conventional battery pack.
FIG. 2 illustrates a conventional pack case housing a cell assembly.
FIG. 3 is a perspective view of a pack case included in a battery pack according to a first embodiment of the present invention.
FIG. 4 is a partial perspective view and partial cross-sectional view of the pack case with the top cover removed.
FIG. 5 shows an example of a protective layer formed on a pack case.
FIG. 6 is illustrates cutting a portion of the pack case of FIG. 3.
FIG. 7 illustrates the movement of high-temperature gases generated in the internal space of the pack case shown in FIG. 6.
FIG. 8 shows the movement path of gas traveling along the gas flow path inside the side wall.
FIG. 9 is a cross-sectional perspective view and cross-sectional view of a portion of a side wall included in a battery pack according to a second embodiment.
FIG. 10 illustrates the movement path of gas introduced to the auxiliary flow path through the auxiliary hole.
FIG. 11 is a cross-sectional perspective view of a portion of a battery pack according to a third embodiment.
FIG. 12 illustrates the battery pack of FIG. 11 with the top cover removed.
FIG. 13 illustrates the movement path of gas traveling from the battery pack of FIG. 11 through the top flow path.
FIG. 14 is a cross-sectional perspective view of a portion of the battery pack.
FIG. 15 illustrates a portion of a pack case with the top cover removed and its partial cross-section.
FIG. 16 illustrates the movement of high-temperature gases generated in the internal space of the pack case.
FIG. 17 illustrates the path that high-temperature gases generated inside the pack case travel through the main wall.

### [Best Mode for Carrying out the Invention]

Hereinafter, the preferred embodiments of the present invention will be described in detail with reference to the attached drawings. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

Therefore, it should be understood that the embodiments described in this specification and the configurations illustrated in the drawings are merely the most preferred embodiments of the present disclosure.

Furthermore, in describing the present invention, specific descriptions of relevant disclosed configurations or features are omitted where it is believed that such detailed description would obscure the essence of the present invention.

Since the embodiments of the present invention are provided to more fully illustrate the present invention to those of ordinary skill in the art, the shapes and sizes of the components in the drawings may be exaggerated, omitted, or shown schematically for clarity. Accordingly, the size or proportions of each component are not necessarily indicative of its actual size or proportions.

The present disclosure relates to a battery pack housing a plurality of cell assemblies. More specifically, the battery pack of the present disclosure is characterized in that the passages through which the gases enter are provided with an insulating material or a flame retardant to prevent the internal structure from collapsing due to high-temperature gases.

A cell assembly used in the present disclosure includes a cell block including a plurality of cells.

The cell includes an electrode assembly in which electrodes and separators including a negative electrode and a positive electrode are stacked alternately, an electrode lead electrically connected with the electrodes, and a battery case enclosing and sealing the electrode assembly so that the electrode leads are drawn out to the outside.

The cell can be categorized into cylindrical cell, prismatic cell, and pouch-type cell based on the shape of the electrode assembly and the battery case.

The cylindrical cell has the electrode assembly rolled into a roll shape and inserted into a cylindrical battery case.

The prismatic cell may have an electrode assembly in the form of a stack where electrodes and separators are alternately stacked, or may be in the form of a stack-folding in which electrodes and the like are provided on a sheet-like separator folded at regular spacings.

The prismatic cell has an electrode assembly inserted into a square box-shaped cell case.

The pouch-type cell may have the electrode assembly in a stacked type, or may be in a stack-folding type.

The pouch-type cell may have an electrode assembly inserted into a pouch-type battery case.

Thus, the cell assembly may include any one among cylindrical cells, prismatic cells, and pouch-type cells.

The cell assembly includes a busbar frame including a plurality of cells and a busbar electrically connected to the electrode leads included in each of the cells.

The cell assembly may further include a module frame wrapped around the perimeter of the cell block such that each cell is protected from external impact. In this case, the module frame may be provided to support or protect only a portion of the cell block, or may be provided over all exposed portions of the cell block to completely isolate the cell block from the outside.

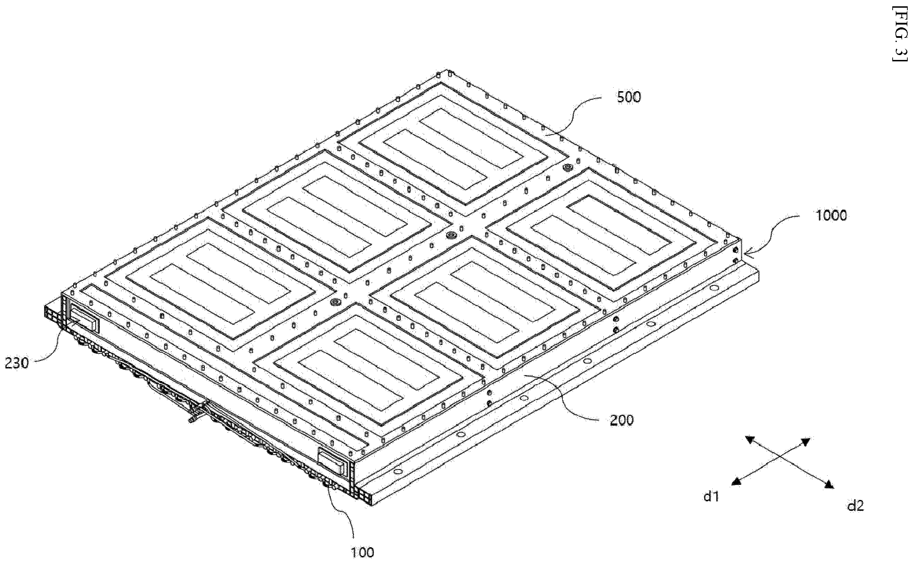

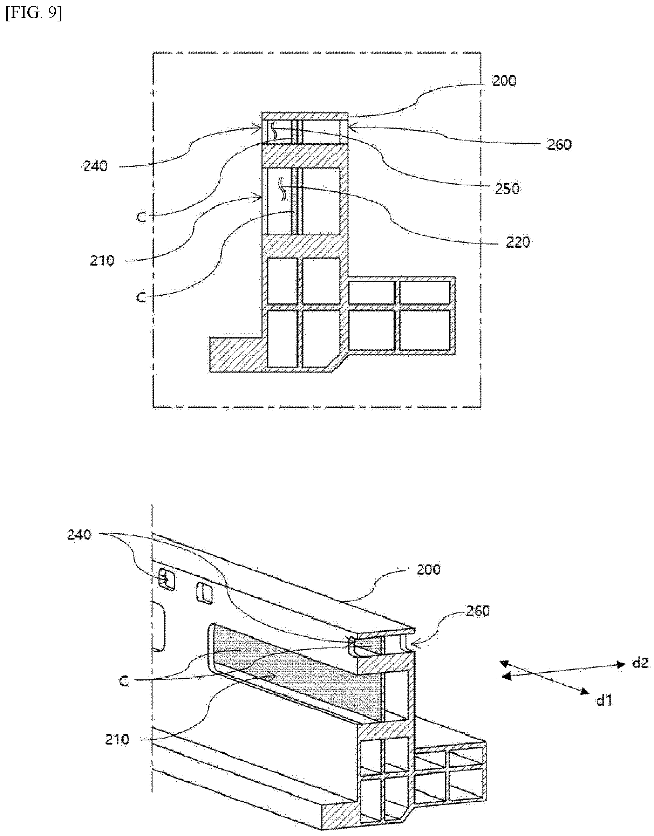

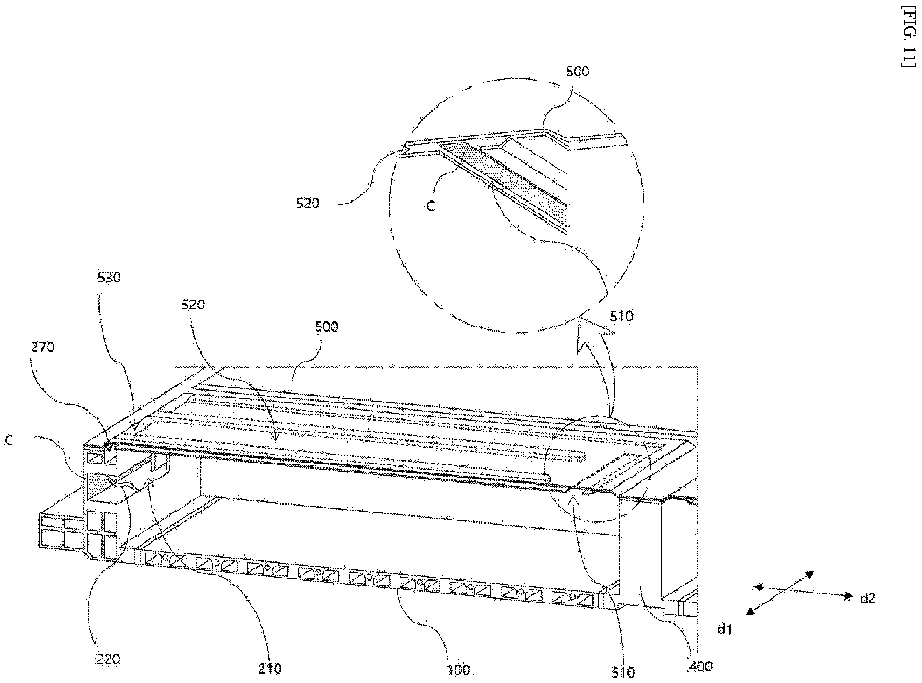

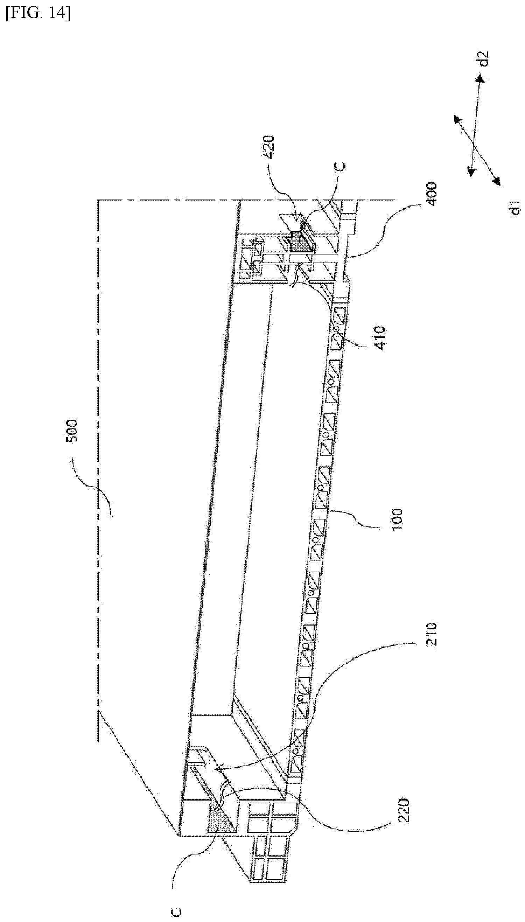

FIGS. 3 through 8 relate to a battery pack according to a first embodiment of the present invention, FIGS. 9 through 10 relate to a battery pack according to a second embodiment of the present invention, FIGS. 11 through 13 relate to a battery pack according to a third embodiment of the present invention, and FIGS. 14 through 17 relate to a battery pack according to a fourth embodiment of the present invention.

Hereinafter, with reference to the following drawings, the battery pack will be described in accordance with each embodiment.

### (First embodiment)

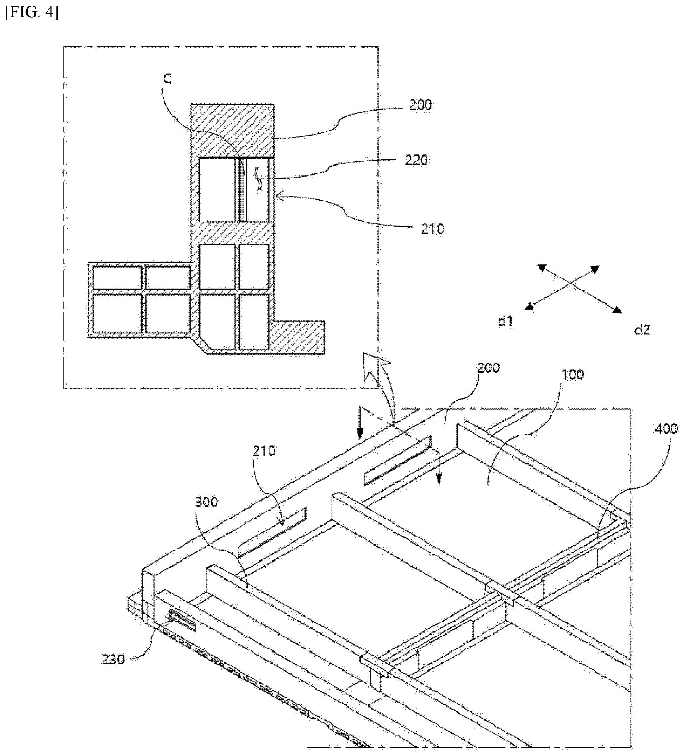

FIG. 3 is a perspective view of a pack case 1000 included in a battery pack according to a first embodiment of the present invention, and FIG. 4 is a partial perspective view and partial cross-sectional view of the pack case 1000 with the top cover 500 removed.

The battery pack of the present invention includes a pack case 1000 that provides a space in which a cell assembly is seated.

The pack case 1000 includes a base plate 100 and a side wall 200.

The cell assembly is seated in an internal space formed by the coupling of the base plate 100 and the side wall 200.

In addition, the pack case 1000 may further include a separation wall 300 and a top cover 500, as desired. The pack case 1000 may further include a main wall 400, which compartmentalizes the internal space into two main sections.

The base plate 100 serves to support the lower part of each cell assembly housed in the pack case 1000.

The base plate 100 may also be provided with cooling flow path through which cooling fluid flows therein to prevent overheating of the cell assembly housed therein, as required.

The separation wall 300 separates the plurality of cell assemblies seated on the base plate 100 and serves to support the side part of the separated cell assemblies.

The separation wall 300 is coupled to the base plate 100 such that it is spaced apart at a predetermined distance along the longitudinal direction d1 of the pack case 1000, as shown in FIG. 4.

The separation wall 300 compartmentalizes the internal space of the pack case 1000, and allows the cell assemblies to be separately seated in each of the compartmentalized spaces.

The side wall 200 serves to support the side parts of the cell assembly seated on the base plate 100 and to protect them from external impact.

The side wall 200 is coupled along the border of the base plate 100.

The side wall 200 has a hollow structure, and gas can move through the hollow. Specifically, the side wall 200 includes a gas flow path 220 through which gas can move therein, as shown in FIG. 4, and a through-hole 210 formed on the gas flow path 220 to communicate with the internal space of the pack case 1000. Thus, when any one of the cell assemblies of the plurality of cell assemblies housed inside the pack case 1000 deteriorates and discharges high-temperature gases, the gases can enter the gas flow path 220 through the through-holes 210 formed in the inner surface of the side wall 200.

The gas flow path 220 may be formed extending along the side wall 200.

One side wall 200 is adjacent to a plurality of spaces compartmentalized by the separation wall 300, so that a plurality of through-holes 210 spaced apart at predetermined distance can be formed in the one gas flow path 220.

The side wall 200 further includes a discharge hole 230 formed on its outer surface to allow the gas flow path 220 to communicate with the outside, and gas traveling through the gas flow path 220 can be discharged to the outside through the discharge hole 230.

The top cover 500 may be coupled with the side wall 200 to cover a top part of a cell stack assembly seated on the base plate 100. More specifically, the top cover 500 is coupled to the top end of the side wall 200 with a border part having a square frame shape provided on the base plate 100. Furthermore, the top cover 500 may be screw-coupled to the top end of each separation wall 300 for a more stable coupling.

The top cover 500 serves to protect the top part of each cell assembly from external impact.

The pack case 1000 may further include a main wall 400 crossing the center part and coupled to the base plate 100 as shown in FIG. 4. In this case, both ends of the separation wall 300 are coupled to the main wall 400 and side wall 200, respectively, to compartmentalize the internal space of the pack case 1000.

The battery pack of the present disclosure is characterized in that the pack case 1000 is coated with a protective layer C including at least one among an insulating material C2 and a flame retardant C1. For example, the protective layer C may be applied to a side wall 200 included in the pack case 1000.

The protective layer C may be formed by applying an insulating material C2 in the form of a slurry or a flame retardant C1 and the like to the surface of the intended area.

The insulating material C2 may include at least one type among organic and inorganic materials. For example, the insulating material C2 may be cork, cotton, felt, carbide, rubber, asbestos, glass wool, quartz cotton, diatomaceous earth, magnesium carbonate powder, and the like. However, the type of insulating material C2 is not limited to those listed above, and any material having a small thermal conductivity or otherwise capable of preventing heat transfer may be used.

The flame retardant C1 may include at least one among a halogen-based flame retardant C1, a phosphorus-based flame retardant C1, or an inorganic compound flame retardant C1. For example, the flame retardant C1 may be tribromophenoxyethane, tetrabromobisphenol-A (TBBA), octabromodiphenylether, calcium bromide, brominated epoxy oligomers, brominated polycarbonate oligomers, chlorinated paraffins, chlorinated polyethylene, alicyclic chlorinated flame retardants C1, red phosphorus, ammonium phosphate, aluminum hydroxide, magnesium hydroxide, boric acid, antimony oxide, tin hydroxide, tin oxide, molybdenum oxide, zirconium compounds, borates, calcium salts, and the like. However, the types of flame retardants C1 are not limited to those listed, and anything that can impede combustion can be used.

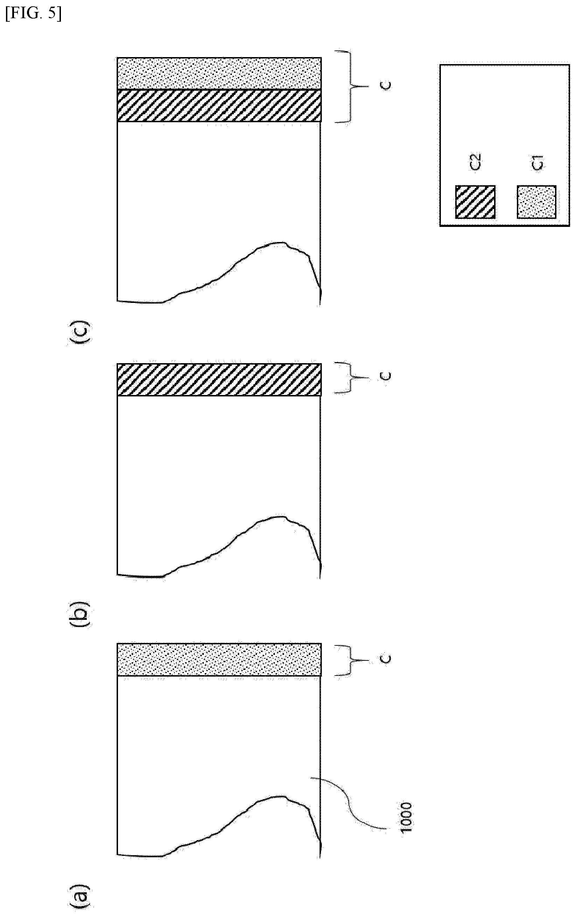

FIG. 5 illustrates an example of a protective layer C formed on the pack case 1000.

The protective layer C may include only the flame retardant C1 as shown in FIG. 5(a), or only the insulating material C2 as shown in FIG. 5(b). Alternatively, it may include both the flame retardant C1 and insulating material C2, in which case it is preferred that the flame retardant C1, which impedes combustion, is located on the outside and the insulating material C2, which impedes heat transfer, is interposed between the pack case 1000 and the flame retardant C1.

The protective layer C is more specifically formed on the gas flow path 220.

The protective layer C is applied for the purpose of protecting the gas flow path 220 from the high heat transferred by the high-temperature gas.

In general, the gas generated from a cell assembly that has undergone thermal runaway has a very high temperature. Therefore, the structures that the gas initially contacts are at high risk of melting or collapse due to the high temperatures.

The protective layer C is formed on the gas flow path 220 adjacent to the through-hole 210 for the purpose of protecting the gas flow path 220 with which the high-temperature gas that has passed through the through-hole 210 comes into contact relatively first.

Referring to the partial cross-sectional view of FIG. 4, a protective layer C is coated on a portion of the inner surface of the gas flow path 220.

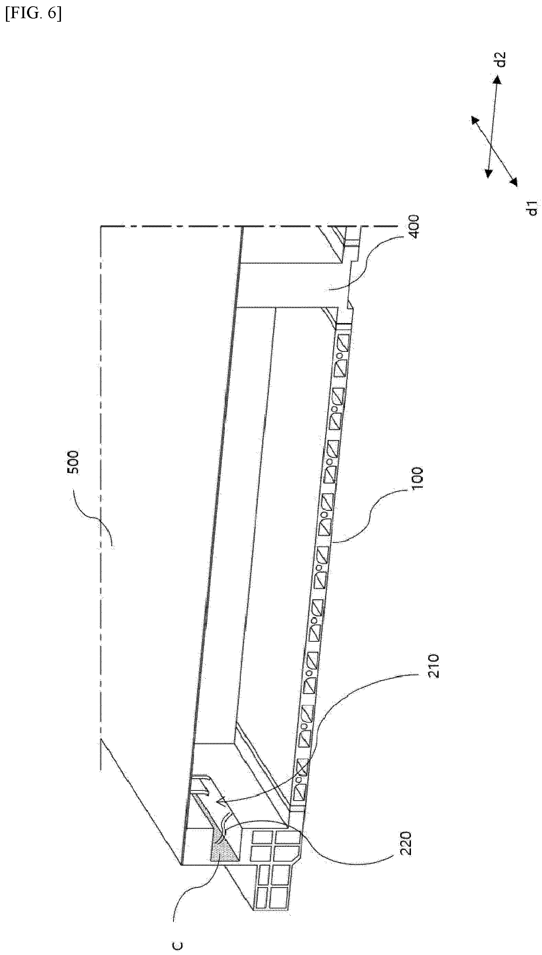

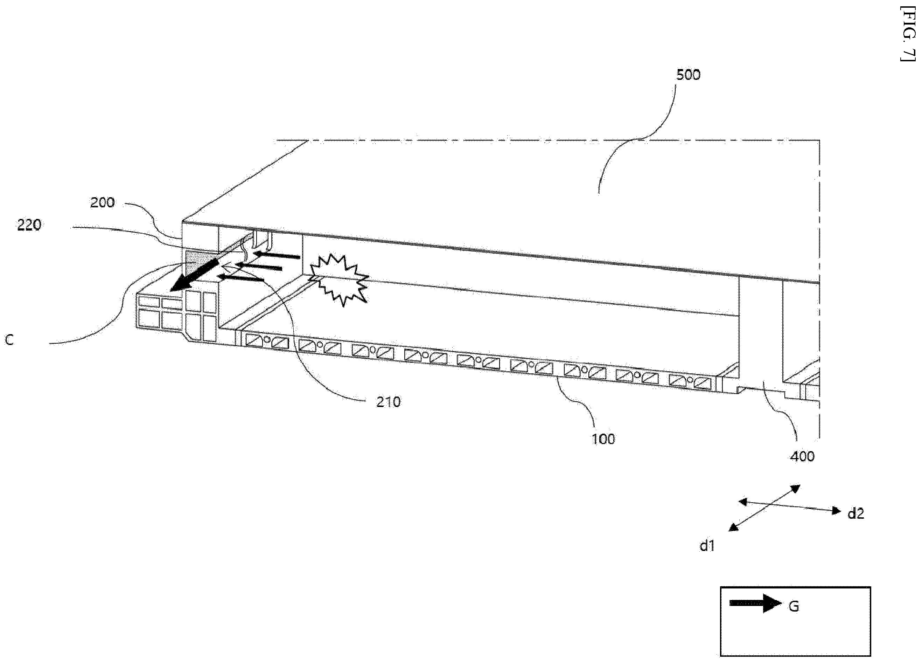

FIG. 6 is a illustrates cutting a portion of the pack case 1000 of FIG. 3. (Note that the cell assembly is omitted from FIG. 7 for ease of understanding.)

Referring to FIG. 6, a protective layer C is formed on the inner surface of the gas flow path 220 exposed through the through-hole 210.

FIG. 7 is a simplified representation of the movement (G) of the high-temperature gases generated in the internal space of the pack case 1000 shown in FIG. 6.

As shown in FIG. 7, high-temperature gases are generated in the compartmentalized space, pass through the through-hole 210 and travel through the gas flow path 220. At this time, the gas first contacts the protective layer C formed on the wall of the gas flow path 220 exposed through the through-hole 210.
The protective layer C protects the gas flow path 220 inside the side wall 200 from the heat of the gas.

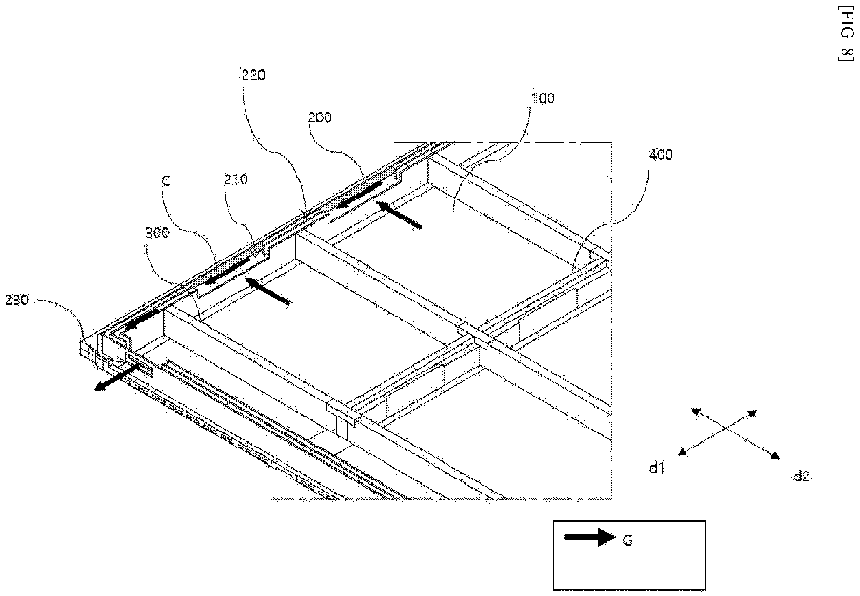

FIG. 8 illustrates a movement (G) path of a gas moving along a gas flow path 220 inside the side wall 200.

The gas enters the gas flow path 220 through the through-holes 210 in each compartment space, as shown in FIG. 8. Thereafter, after moving through the gas flow path 220 formed along the side wall 200, it is discharged to the outside through the discharge hole 230.

The protective layer C may be formed on the gas flow path 220 adjacent to the through-hole 210, as shown in FIGS. 6 through 8, or may be formed throughout the gas flow path 220.

### (Second embodiment)

The battery pack according to a second embodiment of the present disclosure has, in addition to the gas flow path 220, an auxiliary flow path 250, which can assist the function of the gas flow path 220, further formed in the side wall 200.

FIG. 9 is a cross-sectional perspective view and cross-sectional view of a portion of a side wall 200 included in a battery pack according to a second embodiment.

The side wall 200 further includes an auxiliary flow path 250 formed by being spaced apart at a predetermined distance on the top part of the gas flow path 220 and an auxiliary hole 240 formed on the top part of the through-hole 210, as shown in FIG. 9.

The auxiliary hole 240 and the auxiliary flow path 250 may be applied to assist the function of the through-hole 210 and the gas flow path 220. Accordingly, the diameter, size, etc. of the auxiliary hole 240 and the auxiliary flow path 250 may be smaller than the through-hole 210 and the gas flow path 220.

The auxiliary hole 240 is formed on the auxiliary flow path 250 to allow the auxiliary flow path 250 to communicate with the space of the pack case 1000.

Gas introduced into the auxiliary flow path 250 via the auxiliary hole 240 may be externally discharged by a different path than gas introduced into the gas flow path 220. That is, the side wall 200 may further include an auxiliary discharge hole 260 formed through its outer surface to allow the auxiliary flow path 250 to communicate with the outside, as shown in FIG. 9.

The auxiliary discharge hole 260 is formed on the auxiliary flow path 250 such that the auxiliary flow path 250 is in communication with the outside.

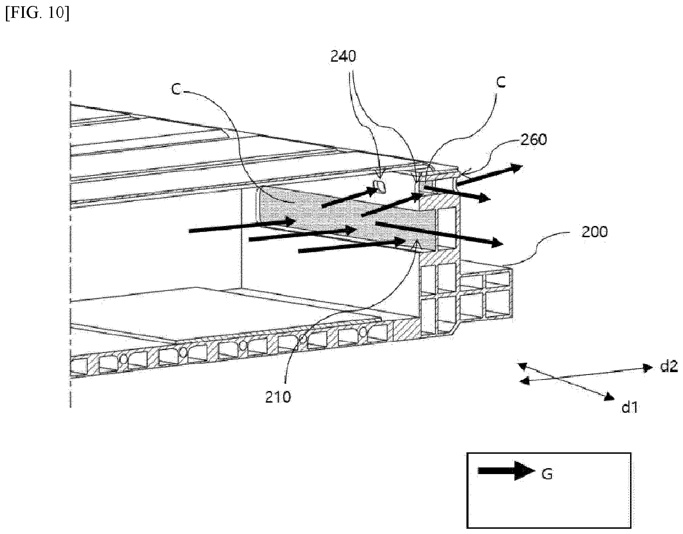

FIG. 10 illustrates a movement (G) path of a gas introduced to the auxiliary flow path 250 through the auxiliary hole 240.

Referring to FIG. 10, high-temperature gases generated in the internal space of the pack case 1000 enter the gas flow path 220 and the auxiliary flow path 250 through the through-hole 210 and the auxiliary hole 240, respectively.

Gas introduced into the auxiliary flow path 250 through the auxiliary hole 240 may move through the auxiliary flow path 250 and be quickly discharged to the outside through any one auxiliary discharge hole 260 in communication with the auxiliary flow path 250.

The plurality of auxiliary holes 240 may be formed in a plurality on the one auxiliary flow path 250.

The battery pack according to a second embodiment is characterized in that the protective layer C is also formed on the auxiliary flow path 250. Preferably, the protective layer C is formed on the auxiliary flow path 250 adjacent to the auxiliary hole 240.

Referring to FIGS. 9 and 10, the protective layer C is coated on the auxiliary flow path 250 exposed through the auxiliary hole 240.

The protective layer C may also be formed by coating the entirety of the auxiliary flow path 250, as in the gas flow path 220.

### (Third embodiment)

The battery pack according to a third embodiment of the present disclosure has a flow path for gas movement formed in the top cover 500.

Specifically, the top cover 500 includes a top flow path 520 for gas to travel therein and a top hole 510 formed on the top flow path 520.

FIG. 11 is a cross-sectional perspective view of a portion of a battery pack according to a third embodiment.

The top cover 500 includes a top flow path 520 for gas movement therein, as shown in FIG. 11, and a top hole 510 formed in the top flow path 520 such that the top flow path 520 communicates with a space in the pack case 1000.

The top flow path 520 may be formed extending along the width direction d2 of the pack case 1000, may be formed extending along the longitudinal direction d1 of the pack case 1000, or may be formed in a variety of shapes zigzagging along the width direction d2 and the longitudinal direction d1 of the pack case 1000, as shown.

At the lower end of the top cover 500, a top hole 510 may be formed in connection with the top flow path 520 as shown in FIG. 11, wherein the top hole 510 is open toward the bottom to allow high-temperature gases generated by the cell assembly located in the lower part to enter the top flow path 520.

Gases introduced through the top cover 500 may move inside the top cover 500 along the top flow path 520 and then travel to the side wall 200. Thus, in this case, a separate flow path may be formed within the side wall 200 that is in communication with the top flow path 520 of the top cover 500.

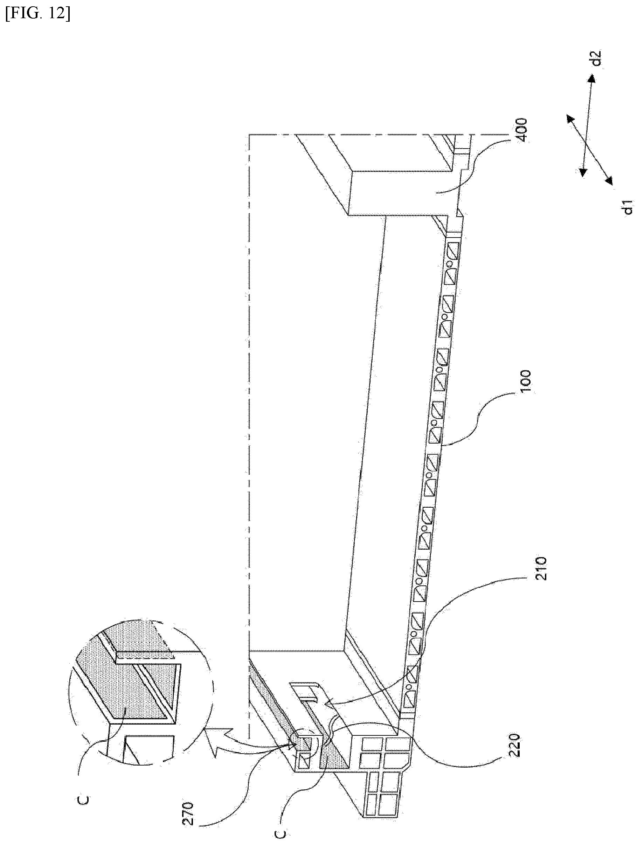

FIG. 12 illustrates the battery pack of FIG. 11 with the top cover 500 removed.

Referring to FIG. 12, the side wall 200 further includes an upwardly open flow path groove 270 at the top end, the flow path groove 270 extending along the gas flow path 220 of the side wall 200.

The top cover 500 includes a communication hole 530 at its border part that is open for a communication between the flow path groove 270 and the top flow path 520.

The top cover 500 is coupled to the side wall 200 such that a border part covers the top part of a flow path groove 270 formed in the top end of the side wall 200, and includes a communication hole 530 in the border part open for communication between the flow path groove 270 and the top flow path 520.

The top cover 500 has a border part coupled to the top end of the side wall 200 such that the flow path groove 270 communicates with the top flow path 520, as shown in FIG. 11.

The top cover 500 is characterized in that it is coated on the inside with a protective layer C including at least one among an insulating material C2 and a flame retardant C1.

As shown in FIG. 11, the protective layer C may be coated on one side of the top flow path 520 exposed through the top hole 510. More specifically, the protective layer C is formed on the top flow path 520 adjacent to the top hole 510.

The protective layer C may also be formed as a coating over the entirety of the top flow path 520.

According to the present disclosure, the protective layer C may also be formed on the flow path groove 270 as shown in FIG. 12. Thus, the flow path grooves 270 inside the side wall 200 may be protected by the protective layer C from high-temperature gases moving through the top flow path 520.

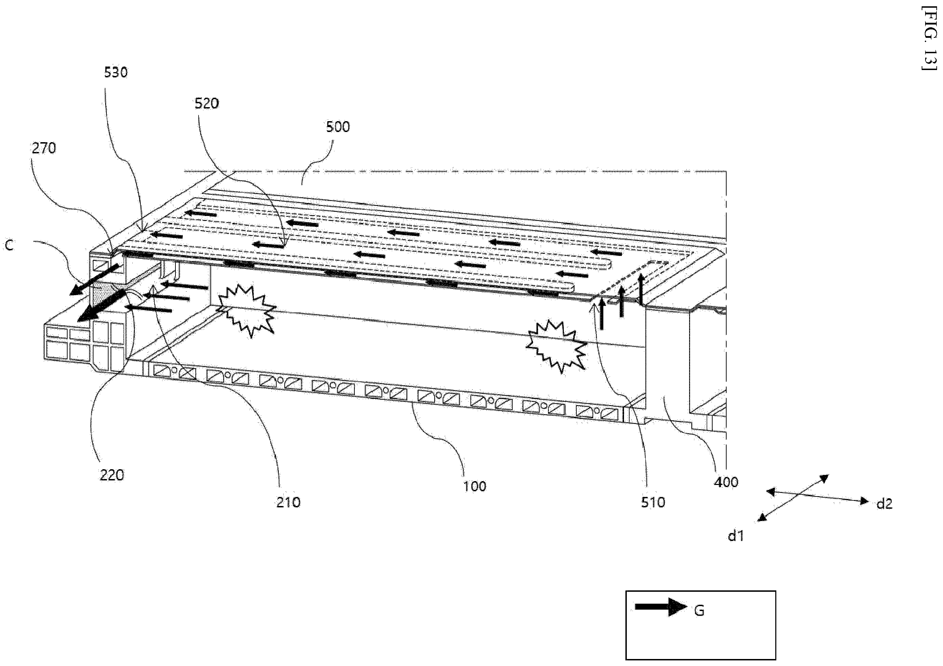

FIG. 13 illustrates a movement G path of a gas moving through the top flow path 520 in the battery pack of FIG. 11.

According to FIG. 13, the high-temperature gas introduced into the top flow path 520 through the top hole 510 moves along the top flow path 520 to the end of the top cover 500. At this time, the protective layer C coated on the top flow path 520 adjacent to the top hole 510 protects the top flow path 520 from being burned or overheated by inhibiting the high-temperature gas entering through the top hole 510.

The gas that has traveled to the end of the top cover 500 enters the flow path groove 270 of the side wall 200 through the communication hole 530 and moves along the flow path groove 270. At this time, if a protective layer C is coated on the surface of the flow path groove 270 adjacent to the communication hole 530, the protective layer C can also protect the flow path groove 270 from the high-temperature gas.

As in the first embodiment, the side wall 200 may further include a discharge hole 230 to allow the gas flow path to communicate with the outside, wherein the discharge hole 230 is also connected to a flow path groove 270 formed in a top part of the gas flow path 220. Thus, high-temperature gases traveling along the flow path groove 270 and gas flow path 220 may be discharged to the outside through the discharge hole 230, respectively.

### (Fourth embodiment)

A battery pack according to a fourth embodiment of the present disclosure includes a hollow main wall 400.

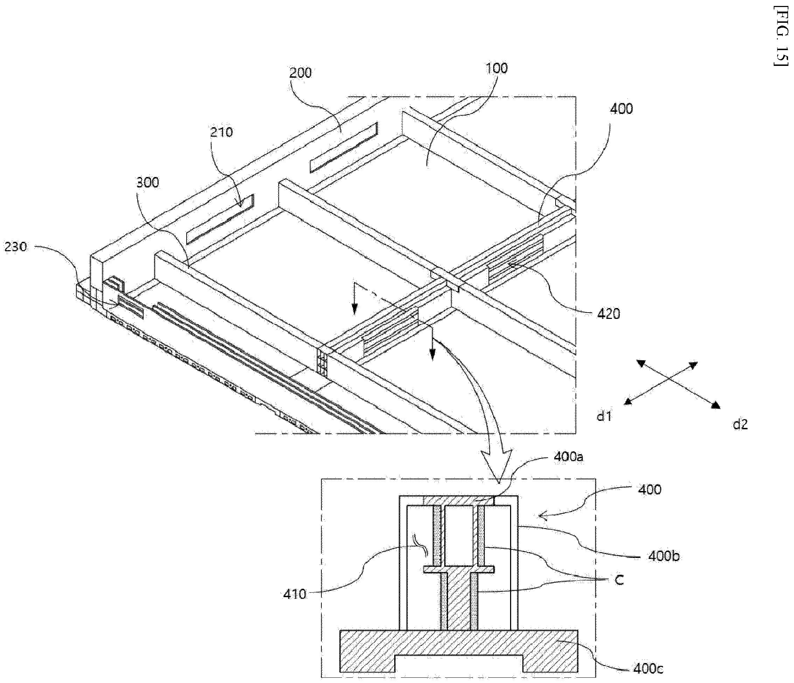

FIG. 14 is a cross-sectional perspective view of a portion of the battery pack, and FIG. 15 illustrates a portion of a pack case 1000 with the top cover 500 removed and its partial cross-section.

Referring to FIG. 14, the main wall 400 includes a main flow path 410 for gas movement therein, and a main hole 420 formed on the main flow path 410 such that the main flow path 410 communicates with the space of the pack case 1000 compartmentalized by the separation wall 300.

The main flow path 410 is formed extending horizontally along the main wall 400.

The protective layer C of the present disclosure may be formed on the main flow path 410. Preferably, the protective layer C is formed on the main flow path 410 adjacent to the main hole 420.

Specifically, the main wall 400 protrudes in a vertical direction as shown in FIG. 15, and extends along a longitudinal direction d1 of the pack case 1000 to form a separating part 400a that divides the internal space of the pack case 1000 in half, a bottom part 400c coupled to the lower end of the separating part 400a to support the lower part of the separating part 400a, and a pair of cover parts 400b coupled to the separating part 400a and the bottom part 400c to form a hollow interior on both sides of the separating part 400a.

The protective layer C may be coated on both sides of the separating part 400a.

High-temperature gases introduced into the main flow path 410 via the main hole 420 can move through the main flow path 410 and be discharged to the outside.

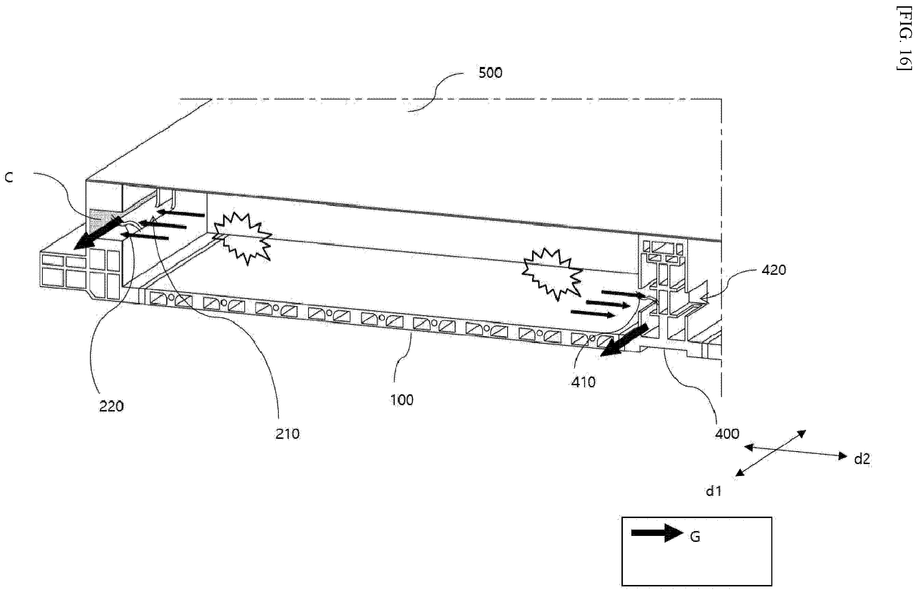

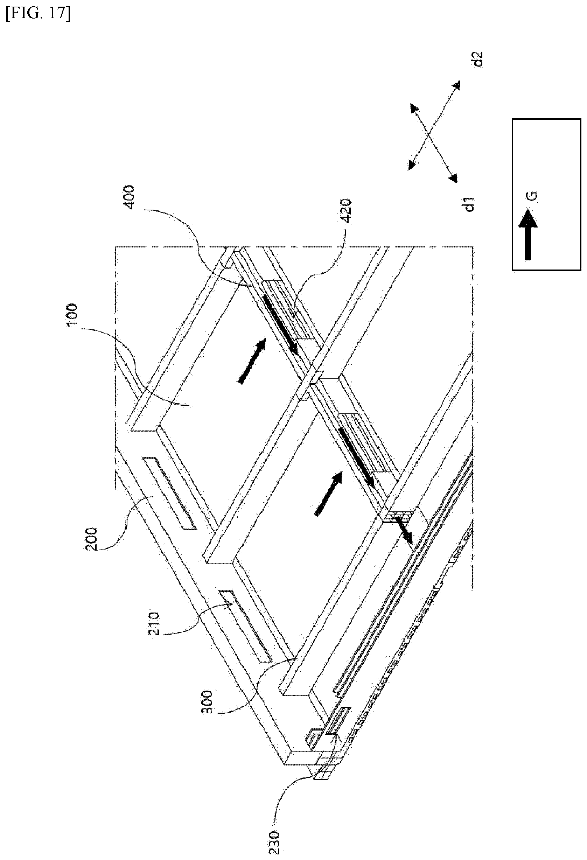

FIGS. 16 and 17 are simplified illustrations of the path that high-temperature gases generated inside the pack case 1000 move through the main wall 400.

The high-temperature gas enters the main flow path 410 including the cover part 400b and the separating part 400a through the main hole 420. Subsequently, the gas travels through the main flow path 410 formed along the main wall 400.

The main wall 400 may be open on at least one among its front and rear ends. More specifically, at least one among the front and rear ends of the main wall 400 may be open to allow the main flow path 410 to communicate with the outside, and gas moving through the main flow path 410 may be discharged to the outside through the open end of the main wall 400.

Referring to FIG. 17, a front end of the main wall 400 is open and the main flow path 410 is exposed to the outside through the front end. High-temperature gases generated inside the pack case 1000 may enter the main flow path 410 through the main hole 420, travel to the front end of the main wall 400, and may be discharged through the opening in the front end of the main wall 400.

The present disclosure has been described in more detail above with reference to the drawings and embodiments. However, it is to be understood that the configurations shown in the drawings or embodiments described herein are only one embodiment of the disclosure. The invention is defined by the appended claims.

### [Reference numerals]

10: (CONVENTIONAL ART) POUCH-TYPE CELL ASSEMBLY
20: (CONVENTIONAL ART) PACK CASE
30: (CONVENTIONAL ART) BASE PLATE
40: (CONVENTIONAL ART) SIDE WALL
50: (CONVENTIONAL ART) SEPARATION WALL
60: (CONVENTIONAL ART) MAIN WALL
1000: PACK CASE
100: BASE PLATE
200: SIDE WALL
210: THROUGH-HOLE
220: GAS FLOW PATH
230: DISCHARGE HOLE
240: AUXILIARY HOLE
250: AUXILIARY FLOW PATH
260: AUXILIARY DISCHARGE HOLE
270: FLOW PATH GROOVE
300: SEPARATION WALL
400: MAIN WALL
400a: SEPARATING PART
400b: COVER PART
400c: BOTTOM PART
410: MAIN FLOW PATH
420: MAIN HOLE
500: TOP COVER
510: TOP HOLE
520: TOP FLOW PATH
530: COMMUNICATION HOLE
C: PROTECTIVE LAYER
C1: FLAME RETARDANT
C2: INSULATING MATERIAL
G: GAS MOVEMENT
d1: PACK CASE LONGITUDINAL DIRECTION
d2: PACK CASE WIDTH DIRECTION

## Claims

1. A battery pack housing a plurality of cell assemblies, comprising:
a pack case (1000) providing a space for a cell assembly to be seated, wherein
the pack case (1000) comprises:
a base plate (100) supporting the lower part of a cell assembly; and
a hollow-structured side wall (200) coupled along a border of the base plate (100) to support a side part of the cell assembly, wherein
the side wall (200) comprises: a gas flow path (220) through which gas can move therein; and a through-hole (210) formed on the gas flow path (220) such that the gas flow path (220) communicates with a space in the pack case (1000),
the side wall (200) is coated with a protective layer (C) including at least one among an insulating material (C2) and a flame retardant (C1) on the inside,
the pack case (1000) further comprises a top cover (500) coupled to the side wall (200) to cover a top part of the cell assembly, **characterized in that**
the top cover (500) comprises: a top flow path (520) for gas to move therein; and a top hole (510) formed on the top flow path (520) such that the top flow path (520) communicates with a space in the pack case (1000), wherein
the top cover (500) is coated with a protective layer (C) including at least one among an insulating material (C2) and a flame retardant (C1) on the inside.

2. The battery pack of claim 1, wherein
the protective layer (C) is formed on a gas flow path (220) adjacent to the through-hole (210).

3. The battery pack of claim 1, wherein
the protective layer (C) is formed throughout the gas flow path (220).

4. The battery pack of claim 1, wherein
the side wall (200) further comprises: an auxiliary flow path (250) formed by being spaced apart at a predetermined distance from the top part of the gas flow path (220); and an auxiliary hole (240) formed at a top part of the through-hole (210) so that a space in the pack case (1000) communicates with the auxiliary flow path (250), wherein
the protective layer (C) is formed on an auxiliary flow path (250) adjacent to the auxiliary hole (240).

5. The battery pack of claim 4, wherein
the protective layer (C) is formed throughout the auxiliary flow path (250).

6. The battery pack of claim 4, wherein
the side wall (200) further comprises an auxiliary discharge hole (240) formed through an outer surface to allow the auxiliary flow path (250) to communicate with the outside.

7. The battery pack of claim 1, wherein
the protective layer (C) is formed on a top flow path (520) adjacent to the top hole (510).

8. The battery pack of claim 1, wherein
the protective layer (C) is formed throughout the top flow path.

9. The battery pack of claim 1, wherein
the side wall (200) further comprises an upwardly open flow path groove (270) at the top end, wherein
the flow path groove (270) is formed extending along a gas flow path (220) of the side wall (200).

10. The battery pack of claim 9, wherein
the top cover (500) is coupled to the side wall (200) such that a border part covers a top part of a flow path groove (270) formed in a top end of the side wall (200), wherein the border part includes a communication hole (530) opened to allow the flow path groove (270) to communicate with the top flow path (520).

11. The battery pack of claim 9, wherein
the protective layer (C) is formed on the flow path groove (270).

12. The battery pack of claim 9, wherein
the side wall (200) further comprises a discharge hole (230) formed through an outer surface to communicate with the gas flow path (220) and the auxiliary groove.

13. The battery pack of claim 1, wherein
the pack case (1000) further comprises a hollow main wall (400) crossing the center part and coupled to the base plate (100), wherein
the main wall (400) comprises: a main flow path (410) through which gas can move therein; and a main hole (420) formed on the main flow path (410) such that the main flow path (410) communicates with a space in the pack case (1000), wherein
the protective layer (C) is formed on a main flow path (410) adjacent to the main hole (420).

14. The battery pack of claim 13, wherein
at least one among the front and rear ends of the main wall (400) is open to allow the main flow path (410) to communicate with the outside.

## Patentansprüche

1. Batteriepack, das eine Vielzahl von Zellenanordnungen aufnimmt, umfassend:
ein Packgehäuse (1000), das einen Raum zur Aufnahme einer Zellenanordnung bereitstellt, wobei
das Packgehäuse (1000) umfasst:
eine Grundplatte (100), die den unteren Teil einer Zellenanordnung trägt; und
eine hohlstrukturierte Seitenwand (200), die entlang eines Rands der Grundplatte (100) gekoppelt ist, um einen Seitenteil der Zellenanordnung zu tragen, wobei
die Seitenwand (200) umfasst: einen Gasströmungsweg (220), durch den sich Gas bewegen kann; und ein Durchgangsloch (210), das an dem Gasströmungsweg (220) ausgebildet ist, so dass der Gasströmungsweg (220) mit einem Raum in dem Packgehäuse (1000) in Verbindung steht,
die Seitenwand (200) auf der Innenseite mit einer Schutzschicht (C) beschichtet ist, die mindestens eines von einem Isoliermaterial (C2) und einem Flammschutzmittel (C1) enthält,
das Packgehäuse (1000) ferner eine obere Abdeckung (500) umfasst, die mit der Seitenwand (200) gekoppelt ist, um einen oberen Teil der Zellenanordnung abzudecken, **dadurch gekennzeichnet, dass**
die obere Abdeckung (500) umfasst: einen oberen Strömungsweg (520), damit sich Gas darin bewegen kann; und ein oberes Loch (510), das an dem oberen Strömungsweg (520) ausgebildet ist, so dass der obere Strömungsweg (520) mit einem Raum in dem Packgehäuse (1000) in Verbindung steht, wobei
die obere Abdeckung (500) auf der Innenseite mit einer Schutzschicht (C) beschichtet ist, die mindestens eines von einem Isoliermaterial (C2) und einem Flammschutzmittel (C1) enthält.

2. Batteriepack nach Anspruch 1, wobei
die Schutzschicht (C) an einem Gasströmungsweg (220) benachbart zum Durchgangsloch (210) ausgebildet ist.

3. Batteriepack nach Anspruch 1, wobei
die Schutzschicht (C) durchgehend auf dem Gasströmungsweg (220) ausgebildet ist.

4. Batteriepack nach Anspruch 1, wobei
die Seitenwand (200) ferner umfasst: einen Hilfsströmungsweg (250), der durch Beabstandung in einem vorbestimmten Abstand vom oberen Teil des Gasströmungswegs (220) ausgebildet ist; und ein Hilfsloch (240), das an einem oberen Teil des Durchgangslochs (210) ausgebildet ist, so dass ein Raum in dem Packgehäuse (1000) mit dem Hilfsströmungsweg (250) in Verbindung steht, wobei
die Schutzschicht (C) an einem Hilfsströmungsweg (250) benachbart zum Hilfsloch (240) ausgebildet ist.

5. Batteriepack nach Anspruch 4, wobei
die Schutzschicht (C) durchgehend auf dem Hilfsströmungsweg (250) ausgebildet ist.

6. Batteriepack nach Anspruch 4, wobei
die Seitenwand (200) ferner ein Hilfsauslassloch (240) umfasst, das durch eine Außenfläche ausgebildet ist, um dem Hilfsströmungsweg (250) zu ermöglichen, mit der Außenseite in Verbindung zu stehen.

7. Batteriepack nach Anspruch 1, wobei
die Schutzschicht (C) an einem oberen Strömungsweg (520) benachbart zum oberen Loch (510) ausgebildet ist.

8. Batteriepack nach Anspruch 1, wobei
die Schutzschicht (C) durchgehend auf dem oberen Strömungsweg ausgebildet ist.

9. Batteriepack nach Anspruch 1, wobei
die Seitenwand (200) ferner eine nach oben offene Strömungswegnut (270) am oberen Ende umfasst, wobei
die Strömungswegnut (270) so ausgebildet ist, dass sie sich entlang eines Gasströmungswegs (220) der Seitenwand (200) erstreckt.

10. Batteriepack nach Anspruch 9, wobei
die obere Abdeckung (500) mit der Seitenwand (200) so gekoppelt ist, dass ein Randteil einen oberen Teil einer Strömungswegnut (270) abdeckt, die in einem oberen Ende der Seitenwand (200) ausgebildet ist, wobei der Randteil ein Verbindungsloch (530) aufweist, das geöffnet ist, um der Strömungswegnut (270) zu ermöglichen, mit dem oberen Strömungsweg (520) in Verbindung zu stehen.

11. Batteriepack nach Anspruch 9, wobei
die Schutzschicht (C) auf der Strömungswegnut (270) ausgebildet ist.

12. Batteriepack nach Anspruch 9, wobei
die Seitenwand (200) ferner ein Auslassloch (230) umfasst, das durch eine Außenfläche ausgebildet ist, um mit dem Gasströmungsweg (220) und der Hilfsnut in Verbindung zu stehen.

13. Batteriepack nach Anspruch 1, wobei
das Packgehäuse (1000) ferner eine hohle Hauptwand (400) umfasst, die den Mittelteil durchquert und mit der Grundplatte (100) gekoppelt ist, wobei
die Hauptwand (400) umfasst: einen Hauptströmungsweg (410), durch den sich Gas bewegen kann; und ein Hauptloch (420), das an dem Hauptströmungsweg (410) ausgebildet ist, so dass der Hauptströmungsweg (410) mit einem Raum in dem Packgehäuse (1000) in Verbindung steht, wobei
die Schutzschicht (C) an einem Hauptströmungsweg (410) benachbart zum Hauptloch (420) ausgebildet ist.

14. Batteriepack nach Anspruch 13, wobei
mindestens eines der vorderen und hinteren Enden der Hauptwand (400) offen ist, um dem Hauptströmungsweg (410) zu ermöglichen, mit der Außenseite in Verbindung zu stehen.

## Revendications

1. Bloc-batterie logeant une pluralité d'ensembles de cellules, comprenant :
un boîtier de bloc (1000) fournissant un espace pour qu'un ensemble de cellules y soit logé, dans lequel
le boîtier de bloc (1000) comprend :
une plaque de base (100) supportant la partie inférieure d'un ensemble de cellules ; et
une paroi latérale à structure creuse (200) couplée le long d'une bordure de la plaque de base (100) pour supporter une partie latérale de l'ensemble de cellules, dans lequel
la paroi latérale (200) comprend : un trajet d'écoulement de gaz (220) à travers lequel du gaz peut se déplacer ; et un trou traversant (210) formé sur le trajet d'écoulement de gaz (220) de sorte que le trajet d'écoulement de gaz (220) communique avec un espace dans le boîtier de bloc (1000),
la paroi latérale (200) est revêtue d'une couche protectrice (C) incluant au moins l'un parmi un matériau isolant (C2) et un retardateur de flamme (C1) sur l'intérieur,
le boîtier de bloc (1000) comprend en outre un couvercle supérieur (500) couplé à la paroi latérale (200) pour couvrir une partie supérieure de l'ensemble de cellules, **caractérisé en ce que**
le couvercle supérieur (500) comprend : un trajet d'écoulement supérieur (520) pour que du gaz s'y déplace ; et un trou supérieur (510) formé sur le trajet d'écoulement supérieur (520) de sorte que le trajet d'écoulement supérieur (520) communique avec un espace dans le boîtier de bloc (1000), dans lequel
le couvercle supérieur (500) est revêtu d'une couche protectrice (C) incluant au moins l'un parmi un matériau isolant (C2) et un retardateur de flamme (C1) sur l'intérieur.

2. Bloc-batterie selon la revendication 1, dans lequel
la couche protectrice (C) est formée sur un trajet d'écoulement de gaz (220) adjacent au trou traversant (210).

3. Bloc-batterie selon la revendication 1, dans lequel
la couche protectrice (C) est formée sur toute la longueur du trajet d'écoulement de gaz (220).

4. Bloc-batterie selon la revendication 1, dans lequel
la paroi latérale (200) comprend en outre : un trajet d'écoulement auxiliaire (250) formé en étant espacé d'une distance prédéterminée de la partie supérieure du trajet d'écoulement de gaz (220) ; et un trou auxiliaire (240) formé au niveau d'une partie supérieure du trou traversant (210) de sorte qu'un espace dans le boîtier de bloc (1000) communique avec le trajet d'écoulement auxiliaire (250), dans lequel
la couche protectrice (C) est formée sur un trajet d'écoulement auxiliaire (250) adjacent au trou auxiliaire (240).

5. Bloc-batterie selon la revendication 4, dans lequel
la couche protectrice (C) est formée sur toute la longueur du trajet d'écoulement auxiliaire (250).

6. Bloc-batterie selon la revendication 4, dans lequel
la paroi latérale (200) comprend en outre un trou d'évacuation auxiliaire (240) formé à travers une surface extérieure pour permettre au trajet d'écoulement auxiliaire (250) de communiquer avec l'extérieur.

7. Bloc-batterie selon la revendication 1, dans lequel
la couche protectrice (C) est formée sur un trajet d'écoulement supérieur (520) adjacent au trou supérieur (510).

8. Bloc-batterie selon la revendication 1, dans lequel
la couche protectrice (C) est formée sur toute la longueur du trajet d'écoulement supérieur.

9. Bloc-batterie selon la revendication 1, dans lequel
la paroi latérale (200) comprend en outre une rainure de trajet d'écoulement ouverte vers le haut (270) à l'extrémité supérieure, dans lequel
la rainure de trajet d'écoulement (270) est formée en s'étendant le long d'un trajet d'écoulement de gaz (220) de la paroi latérale (200).

10. Bloc-batterie selon la revendication 9, dans lequel
le couvercle supérieur (500) est couplé à la paroi latérale (200) de telle sorte qu'une partie de bordure couvre une partie supérieure d'une rainure de trajet d'écoulement (270) formée dans une extrémité supérieure de la paroi latérale (200), dans lequel la partie de bordure inclut un trou de communication (530) ouvert pour permettre à la rainure de trajet d'écoulement (270) de communiquer avec le trajet d'écoulement supérieur (520).

11. Bloc-batterie selon la revendication 9, dans lequel
la couche protectrice (C) est formée sur la rainure de trajet d'écoulement (270).

12. Bloc-batterie selon la revendication 9, dans lequel
la paroi latérale (200) comprend en outre un trou d'évacuation (230) formé à travers une surface extérieure pour communiquer avec le trajet d'écoulement de gaz (220) et la rainure auxiliaire.

13. Bloc-batterie selon la revendication 1, dans lequel
le boîtier de bloc (1000) comprend en outre une paroi principale creuse (400) traversant la partie centrale et couplée à la plaque de base (100), dans lequel
la paroi principale (400) comprend : un trajet d'écoulement principal (410) à travers lequel du gaz peut se déplacer ; et un trou principal (420) formé sur le trajet d'écoulement principal (410) de sorte que le trajet d'écoulement principal (410) communique avec un espace dans le boîtier de bloc (1000), dans lequel
la couche protectrice (C) est formée sur un trajet d'écoulement principal (410) adjacent au trou principal (420).

14. Bloc-batterie selon la revendication 13, dans lequel
au moins l'une des extrémités avant et arrière de la paroi principale (400) est ouverte pour permettre au trajet d'écoulement principal (410) de communiquer avec l'extérieur.
